# EUROPÄISCHE PATENTSCHRIFT

(11) **EP 3 311 658 B1**
(45) Veröffentlichungstag und Bekanntmachung des Hinweises auf die Patenterteilung: **28.08.2024**
(21) Anmeldenummer: 16195337.7
(22) Anmeldetag: 24.10.2016
(51) Int. Cl.: A01K 1/00, F24F 12/00, F28D 17/00, F28D 17/02

(54) **VORRICHTUNG ZUR KLIMATISIERUNG VON TIERSTÄLLEN**
DEVICE FOR AIR CONDITIONING ANIMAL STALLS
DISPOSITIF DE CLIMATISATION DE STALLES POUR ANIMAUX

(43) Veröffentlichungstag der Anmeldung: 25.04.2018
(73) Patentinhaber: A. G. Stalltechnik & Genetik GmbH, 26892 Heede / Ems (DE)
(72) Erfinder: Ganseforth, Heinrich, 26892 Heede (DE)
(74) Vertreter: Jabbusch, Matthias

(56) Entgegenhaltungen:
- WO-A1-2012/130285
- DE-A1- 102007 025 175
- DE-U1- 202009 005 612
- DE-U1- 202011 101 199
- US-A1- 2005 011 203

## Beschreibung

Die Erfindung betrifft eine Vorrichtung zur Klimatisierung von Tierställen mit wenigstens einem Wärmeträger, insbesondere zur Klimatisierung einer Tierställen zugeführten Zuluft, wobei der Wärmeträger Speicherkörper aus wenigstens einem mit Metallionen versetzten Speichermaterial aufweist.

Der bei Tierställen wohl gebräuchlichste Wärmeträger ist ein durch Wärmetauscher geführtes Heizungswasser. Aber auch das die Stallwandungen ausbildende Mauerwerk, welches durch tageszeitlich bedingte Temperaturschwankungen in der Lage ist, in die Tierställe eingeleitete Frischluft zu kühlen oder zu erwärmen, fungiert als Wärmeträger. Weiterhin ist es bekannt, eine aus dem Tierstall abzuführende Abluft als Wärmeträger zu nutzen, indem die in ihr enthaltene Wärme, beispielsweise im Dachraum des Tierstalles, an eine zuzuführende Frischluft abgegeben wird. Eine Steuerung der in den Stallgebäuden für die Tiere einzuhaltenden Temperaturen erfolgt regelmäßig über mit Lüftungssystemen fahrbare Lüftungsraten. Insbesondere in den Wintermonaten kommt es dabei jedoch regelmäßig zu Überschreitungen der für die Stallluft zulässigen Schadgaswerte, dieses deshalb, weil niedrige Außentemperaturen die Lüftungsraten herunter regeln. Im Schadgas maßgeblich enthaltenes Ammoniak kann bei den Tieren dann schnell zu Verätzungen, wenigstens jedoch zu Reizungen ihrer Atemwege führen. Die Folge sind Atemwegserkrankungen, da die gereizten oder gar geschädigten Schleimhäute für viele Krankheitserreger eine Angriffsfläche bieten. Der Ausbreitung von Krankheitserregern wird schließlich durch regelmäßige Antibiotikagaben entgegen gewirkt. Die Nachteile eines derartigen Antibiotikaeinsatzes sind hinlänglich bekannt.

Aus der internationalen Anmeldeschrift WO 2012/130 285 A1 ist ein thermisches Energiespeichermedium bekannt, bei dem der Speicherkörper aus einem Phasenwechselmaterial besteht und bei dem dieses Phasenwechselmaterial mit Metallionen versetzt ist. Dabei wird die Speicherwirkung des Phasenwechselmaterials durch eine Phasenänderung zwischen dem festen und dem flüssigen Aggregatzustand herbeigeführt.

Der Erfindung liegt die Aufgabe zugrunde, eine Vorrichtung der eingangs genannten Gattung aufzuzeigen, mit der ein Überschreiten zulässiger Schadgaswerte besonders effektiv verhindert werden kann. Diese Aufgabe ist erfindungsgemäß durch die Merkmale des Patentanspruches 1 gelöst. Vorteilhafte Weiterbildungen der Erfindung sind in den Unteransprüchen angegeben.

Die erfindungsgemäße Vorrichtung zeichnet sich dadurch aus, dass die Speicherkörper im Inneren einer Lüftungsleitung angeordnet sind, und dass der Wärmeträger wenigstens ein aus den Speicherkörpern ausgebildetes Stapel- oder Schüttwerk aufweist. Das Stapelwerk bietet die Möglichkeit, die Speicherkörper innerhalb eines Verbundes auszurichten. In Abhängigkeit von den Körpergeometrien der Speicherkörper ermöglicht ihre Ausrichtung die Ausbildung definierter Strömungswege und damit eine vorteilhaft gleichmäßige Belastung der zwischen Speicherkörper und Leitungsluft ausgebildeten Grenzschichten.

Das Schüttwerk ist insbesondere für Speicherkörper mit geometrisch unbestimmten Formen, beispielsweise für gebrochene Körper, geeignet. Im Schüttwerk zwischen den Speicherkörpern ausgebildete Zwischenräume bilden dann ein ganzes Netzwerk aus Strömungswegen für die Leitungsluft aus. Das Schüttwerk wird vorzugsweise durch Einbauten wie, beispielsweise Gitterkäfige zusammengehalten, und die Einbauten werden in gehäuseartige Erweiterungen der Lüftungsleitung eingesetzt.

Das Versetztsein des Speicherkörpers mit Metallionen meint die Einbindung der Metallionen in das Materialgefüge des Speicherkörpers mindestens aber die oberflächennahe Einbindung in Form einer metallischen Beschichtung des Speicherkörpers. Für eine solche Einbindung werden die Metallionen mit einem formlosen, also fließ- und schüttfähigen Rohmaterial vermengt, bevor dieses unter Entstehung eines festen Materialgefüges zu dem Speicherkörper ausgehärtet wird. Die Aushärtung erfolgt durch thermisch oder chemisch induzierte Abbindungsprozesse. Viele Metallionen haben auf niedere Lebensformen, wie Moose, Flechten, Pilze, Bakterien und Viren, eine vorteilhaft toxische Wirkung, mit der eine unerwünschte Besiedlung der Speicherkörper mit Krankheitserregern weitgehend verhindert ist. So sind Kupferionen bekannterweise zur Bekämpfung von Moosen, Flechten und Pilzen geeignet. Silberionen eignen sich hingegen zur Bekämpfung von Bakterien und Viren. Weitere zur Bekämpfung von Mikroorganismen geeignete Metallionen sind insbesondere die von Zink, Zinn, Blei und Gold. Die Anordnung der Speicherkörper im Inneren einer Lüftungsleitung gewährleistet, ähnlich wie in einem Wärmeüberträger, einen besonders effektiven Wärmeübergang zwischen Leitungsluft und Speicherkörpern, da ihre Oberflächen von der Leitungsluft richtungsgebunden überströmt werden. Zur Aufnahme des Wärmeträgers weist die Lüftungsleitung eine gehäuseartige Erweiterung auf, deren Strömungsdurchmesser zu denen der Leitungsanschlüsse ungleich größer ist. Damit dient die gehäuseartige Erweiterung neben der Aufnahme des Wärmeträgers insbesondere auch einer Verzögerung in der an den Speicherkörpern vorherrschenden Strömungsgeschwindigkeit.

Um das Risiko einer Kontamination der einem Tierstall zugeführten Zuluft mit Bakterien und Keimen weiter herabzusetzen, wird außerdem vorgeschlagen, in der Lüftungsleitung wenigstens eine dem Wärmeträger nachgeschaltete UV-Desinfektionseinrichtung anzuordnen. Selbstverständlich liegt es im Rahmen der Erfindung, die UV-Desinfektionseinrichtung gegen Desinfektionseinrichtungen mit anderen Wirkmechanismen, beispielsweise der Desinfektion mit Wasserstoffperoxid auszutauschen oder die UV-Desinfektionseinrichtung mit anderen Desinfektionsprinzipien zu kombinieren.

Um zu verhindern, dass Bakterien und Keime über die Prozessluft durch die Lüftungsleitung hindurch in den Wärmeträger hinein gelangen, wird vorgeschlagen, in der Lüftungsleitung einen dem Wärmeträger vorgeschalteten Partikelfilter anzuordnen.

Nach einer nächsten Weiterbildung der Erfindung ist dem Wärmeträger wenigstens eine Beregnungseinrichtung zugeordnet, die auf die Speicherkörper ausgerichtete Sprühdüsen aufweist. Die Beregnungseinrichtung dient der gleichmäßigen Verteilung eines Kühlwassers oder einer anderen geeigneten Kühlflüssigkeit über die Speicherkörper und damit zum Aufbau einer maximal großen Verdunstungsfläche. Mit den Sprühdüsen wird ein in das Innere der Lüftungsleitung geleiteter Kühlwasserstrom in einen Sprühstrahl zur möglichst flächendeckenden Beregnung der Speicherkörper aufgeweitet. Insbesondere bei hohen sommerlichen Temperaturen bietet die Beregnungseinrichtung die Möglichkeit einer adiabatischen Kühlung des Wärmeträgers durch Abführung von Verdampfungsenergie über die in den Tierstall einzuleitende Frischluft. Der abgekühlte Wärmeträger steht nachfolgend für eine effektive Kühlung nachströmender Frischluft zur Verfügung.

Um die Verdunstungsleistung des Wärmeträgers maximal zu vergrößern, weisen die Speicherkörper ein poröses Materialgefüge mit kapillaren Eigenschaften auf. Die Kapillaren ermöglichen den Speicherkörpern eine von der Beregnungseinrichtung unabhängige Wasserversorgung, beispielsweise über eine Kondensatwanne, aus welcher zeitweise an den Speicherkörpern ablaufendes Kondenswasser oder überschüssiges Beregnungswasser aufgefangen und über die Kapillaren wieder aufgesogen wird.

Nach einer besonders vorteilhaften Weiterbildung der Erfindung weist der Wärmeträger ein nach Art eines ISO-Containers ausgebildetes Gehäuse auf. Der ISO-container dient mit Vorteil als Trägerstruktur zur gemeinsamen Anordnung von UV-Desinfektionseinrichtung, Partikelfilter und Wärmeträger und bietet somit eine besonders einfache Möglichkeit zur Ausbildung eines kompakt bauenden Kleingerätes. Diese Ausbildung erlaubt mit Vorteil eine kostengünstige Nutzung sämtlicher für ISO-Container entwickelter Fertigungstechniken sowie Transport- und Lagersysteme, die einen mobilen Einsatz der erfindungsgemäßen Vorrichtung oder eine kostengünstige Nachrüstung bestehender Tierställe mit der erfindungsgemäßen Vorrichtung, insbesondere durch einen einfachen und kostengünstigen Transport auf Sattelschleppern, ermöglichen.

Eine kostengünstige Herstellung sowie eine logistisch einfache Handhabung der Speicherkörper ist für die Erfindung von Vorteil. Obgleich auch andere Speichermaterialien zur Herstellung der Speicherkörper durchaus geeignet sein können, ist nach einer besonders bevorzugten Weiterbildung der Erfindung vorgesehen, als Speicherkörper aus Ton gebrannte Lochziegel zu verwenden.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer erfindungsgemäßen Vorrichtung an einem ersten Aufstellungsort, und
- Fig. 2:: eine perspektivische Ansicht der Vorrichtung gemäß Fig. 1 an einem zweiten Aufstellungsort.

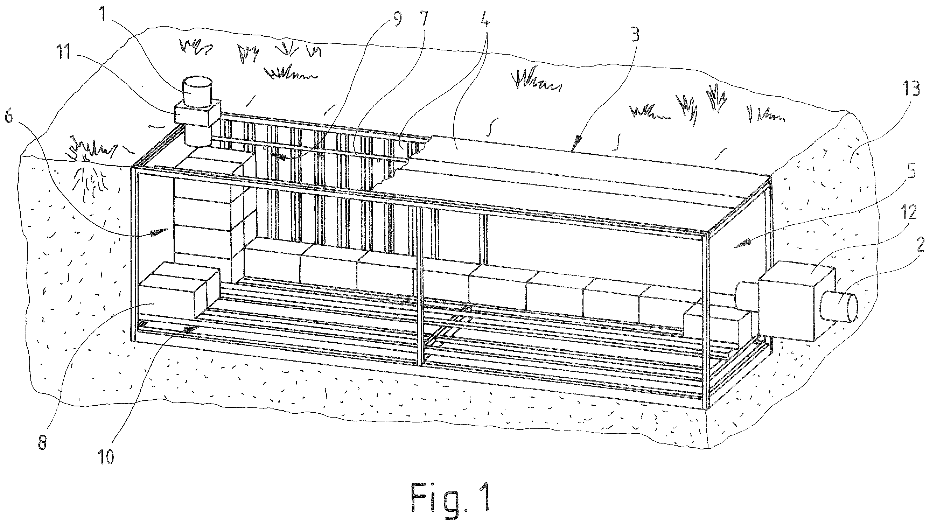

Die Fig. 1 zeigt eine perspektivische Ansicht der erfindungsgemäßen Vorrichtung zur Klimatisierung einer Tierställen zugeführten Zuluft mit einem Wärmeträger 6, der eine Vielzahl von Speicherkörpern 8 aus einem mit Metallionen versetzten Speichermaterial aufweist. Die Speicherkörper 8 sind im Inneren 5 einer gehäuseartigen Erweiterung 3 einer Lüftungsleitung 1, 2 angeordnet und bilden ein in der Figur aus Gründen einer besseren Verständlichkeit nur unvollständig dargestelltes Stapelwerk aus. In der von den Wandungen 4 eines ISO-Containers ausgebildeten gehäuseartigen Erweiterung 3 sind neben den Speicherkörpern 8 auch eine Beregnungseinrichtung 7 angeordnet. Die Speicherkörper 8 des Wärmeträgers 6 sind Strangpressklinker mit in ihr Tonmaterial eingebundenen Silberionen. Die Speicherkörper 8 weisen ein Hohlkammerprofil auf, dessen Hohlkammern (nicht dargestellt) in Längsrichtung der gehäuseartigen Erweiterung 3 verlaufen. Die Beregnungseinrichtung 7 weist auf den Wärmeträger 6 ausgerichtete Sprühdüsen 9 sowie eine den Wärmeträger 6 aufnehmende Tropfwanne 10 auf. Dem Wärmeträger 6 ist ein in der Lüftungsleitung 1 gelegener Partikelfilter 11 vorgeschaltet und eine in der Lüftungsleitung 2 gelegene Desinfektionseinrichtung 12 nachgeschaltet. Die Fig. 1 zeigt die gehäuseartige Erweiterung 3 der erfindungsgemäßen Vorrichtung in das Erdreich 13 eines Aufstellungsortes eingelassen.

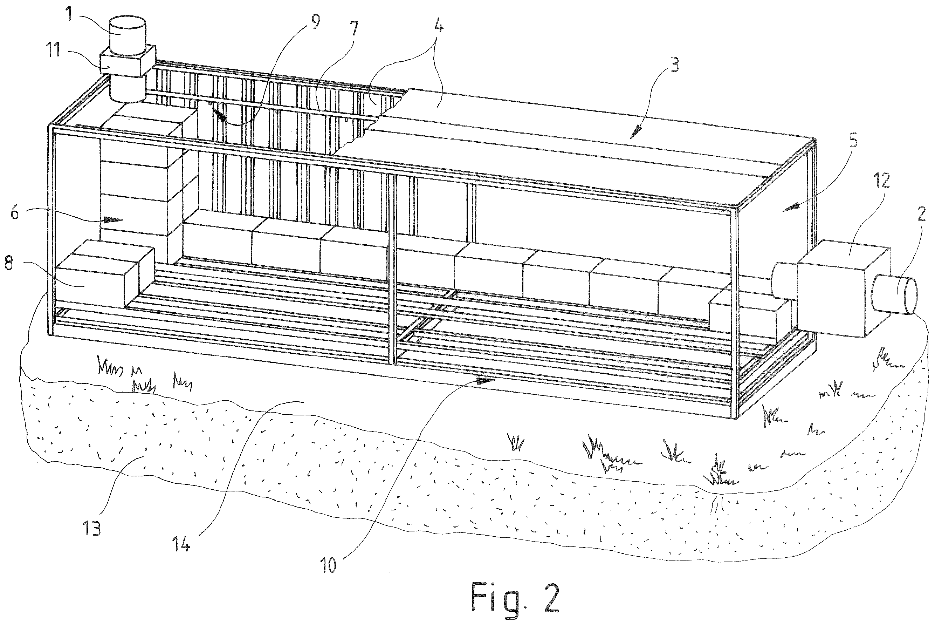

Die Fig. 2 zeigt die gehäuseartige Erweiterung 3 der Vorrichtung gemäß Fig. 1 mit seiner Unterseite auf die Oberfläche 14 des Erdreichs 13 aufgestellt. Gleiche Bauteile sind mit gleichen Bezugszahlen versehen.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten, solange sie unter dem Schutzanspruch der Ansprüche fallen.

### Bezugszahlenliste:

- 1: Lüftungsleitung
- 2: Lüftungsleitung
- 3: gehäuseartige Erweiterung
- 4: Wandungen
- 5: Inneres
- 6: Wärmeträger
- 7: Beregnungseinrichtung
- 8: Speicherkörper
- 9: Sprühdüsen
- 10: Tropfwanne
- 11: Partikelfilter
- 12: UV-Desinfektionseinrichtung
- 13: Erdreich
- 14: Oberfläche

## Patentansprüche

1. Vorrichtung mit wenigstens einem Wärmeträger, zur Klimatisierung einer Tierställen zugeführten Zuluft, wobei der Wärmeträger Speicherkörper aus wenigstens einem mit Metallionen versetzten Speichermaterial aufweist,
**dadurch gekennzeichnet,**
**dass** die Speicherkörper (8) im Inneren (5) einer Lüftungsleitung (1, 2) angeordnet sind, und
**dass** der Wärmeträger (6) wenigstens ein aus den Speicherkörpern (8) ausgebildetes Stapel- oder Schüttwerk aufweist.

2. Vorrichtung nach Anspruch 1, **dadurch gekennzeichnet, dass** in der Lüftungsleitung (1, 2) wenigstens eine dem Wärmeträger (6) nachgeschaltete UV-Desinfektionseinrichtung (12) angeordnet ist.

3. Vorrichtung nach einem der Ansprüche 1 oder 2, **dadurch gekennzeichnet, dass** in der Lüftungsleitung (1, 2) wenigstens ein dem Wärmeträger (6) vorgeschalteter Partikelfilter (11) angeordnet ist.

4. Vorrichtung nach einem der Ansprüche 1 bis 3, **dadurch gekennzeichnet, dass** dem Wärmeträger (6) wenigstens eine Beregnungseinrichtung (7) zugeordnet ist, die auf die Speicherkörper (8) ausgerichtete Sprühdüsen (9) aufweist.

5. Vorrichtung nach einem der Ansprüche 1 bis 4, **dadurch gekennzeichnet, dass** die Speicherkörper (8) ein poröses Materialgefüge mit kapillaren Eigenschaften aufweisen.

6. Vorrichtung nach einem der Ansprüche 1 bis 5, **dadurch gekennzeichnet, dass** der Wärmeträger (6) ein nach Art eines ISO-Containers ausgebildetes Gehäuse aufweist.

7. Vorrichtung nach einem der Ansprüche 1 bis 6, **dadurch gekennzeichnet, dass** die Speicherkörper (8) aus Ton gebrannte Lochziegel sind.

## Claims

1. A device with at least one heat carrier for conditioning air supplied to animal stables, wherein the heat carrier has storage bodies comprised of at least one storage material mixed with metal ions,
**characterized in that**
the storage bodies (8) are arranged inside (5) of a ventilation line (1, 2), and that
the heat carrier (6) has at least one stacking or dumping plant formed out of the storage bodies (8).

2. The device according to claim 1, **characterized in that** at least one UV disinfection device (12) downstream from the heat carrier (6) is arranged in the ventilation line (1, 2).

3. The device according to one of claims 1 or 2, **characterized in that** at least one particle filter (11) upstream from the heat carrier (6) is arranged in the ventilation line (1, 2).

4. The device according to one of claims 1 to 3, **characterized in that** the heat carrier (6) has allocated to it at least one sprinkler system (7) that has spray nozzles (9) aligned to the storage bodies (8) .

5. The device according to one of claims 1 to 4, **characterized in that** the storage bodies (8) have a porous material structure with capillary properties.

6. The device according to one of claims 1 to 5, **characterized in that** the heat carrier (6) has a housing designed like an ISO container.

7. The device according to one of claims 1 to 6, **characterized in that** the storage bodies (8) are perforated bricks fired from clay.

## Revendications

1. Dispositif avec au moins un caloporteur pour la climatisation d'une alimentation d'air acheminée à une stalle pour animaux, sachant que le caloporteur comporte des corps d'accumulation composés d'au moins un matériau additionné d'ions métalliques, **caractérisé en ce que**
les corps d'accumulation (8) sont disposés à l'intérieur (5) d'un conduit d'aération (1, 2), et
**en ce que** le caloporteur (6) comporte au moins un mécanisme d'empilage ou de décharge constitué des corps d'accumulation (8).

2. Dispositif selon la revendication 1, **caractérisé en ce qu'**au moins un système de désinfection aux UV (12) monté en aval du caloporteur (6) est disposé dans le conduit d'aération (1, 2).

3. Dispositif selon l'une quelconque des revendications 1 ou 2, **caractérisé en ce qu'**au moins un filtre à particules (11) monté en amont du caloporteur (6) est disposé dans le conduit d'aération (1, 2).

4. Dispositif selon l'une quelconque des revendications 1 à 3, **caractérisé en ce qu'**au moins un système d'arrosage (7) est attribué au caloporteur (6), qui comporte des buses de pulvérisation (9) orientées sur les corps d'accumulation (8).

5. Dispositif selon l'une quelconque des revendications 1 à 4, **caractérisé en ce que** les corps d'accumulation (8) comportent une structure de matériau poreuse avec des propriétés capillaires.

6. Dispositif selon l'une quelconque des revendications 1 à 5, **caractérisé en ce que** le caloporteur (6) comporte un boîtier constitué à la manière d'un conteneur ISO.

7. Dispositif selon l'une quelconque des revendications 1 à 6, **caractérisé en ce que** les corps d'accumulation (8) sont en briques creuses cuites en argile.
